# FASCICULE DE BREVET EUROPEEN

(11) **EP 3 159 774 B1**
(45) Date de publication et mention de la délivrance du brevet: **13.04.2022**
(21) Numéro de dépôt: 16194906.0
(22) Date de dépôt: 20.10.2016
(51) Int. Cl.: G06F 3/01, B60K 37/06, G06F 3/0354

(54) **DISPOSITIF À INTERFACE CAPACITIVE POUR VÉHICULE AUTOMOBILE**
VORRICHTUNG MIT KAPAZITIVER SCHNITTSTELLE FÜR KRAFTFAHRZEUG
DEVICE WITH CAPACITIVE INTERFACE FOR MOTOR VEHICLE

(30) Priorité: 20.10.2015 FR 1560015
(43) Date de publication de la demande: 26.04.2017
(73) Titulaire: DAV, 94046 Créteil Cedex (FR)
(72) Inventeur: AUBRY, Anthony, 94046 Créteil CEDEX (FR); EL-OUARDI, Nour-Eddine, 94046 Créteil CEDEX (FR); WANIR, Said, 94046 Créteil CEDEX (FR)
(74) Mandataire: Delplanque, Arnaud

(56) Documents cités:
- EP-A2- 2 680 109
- WO-A2-2014/018211
- FR-A1- 2 977 334

## Description

La présente invention concerne un dispositif à interface capacitive pour véhicule automobile configuré pour générer un retour haptique à un utilisateur en réponse à un contact sur l'interface capacitive.

Dans le domaine automobile, les interfaces de commande multifonctions à dalle tactile sont de plus en plus utilisées pour commander des systèmes électriques ou électroniques, tels qu'un système de climatisation, un système audio ou encore un système de navigation. De telles interfaces peuvent être associées à un écran d'affichage et permettre une navigation dans des menus déroulants.

Afin de restituer une information par retour mécanique confirmant à l'utilisateur un contact sur la dalle tactile similaire au retour d'un système mécanique, on prévoit la génération d'un retour haptique comme rétroaction à l'utilisateur. Le retour haptique est généralement obtenu par l'action d'un actionneur vibratoire relié à la dalle tactile et piloté pour faire vibrer la dalle tactile en réponse à un contact de la surface.

Il existe plusieurs types de dalles tactiles, les plus courantes étant les dalles tactiles résistives et les dalles tactiles capacitives.

Contrairement aux dalles tactiles résistives, les dalles tactiles capacitives sont constituées d'éléments configurés pour présenter une rigidité telle qu'elles ne se déforment pas lorsqu'on appuie dessus. Cependant, les dalles tactiles capacitives ne permettent pas de détecter la force d'appui avec laquelle l'utilisateur appuie sur la surface. Cette information peut être utile dans certains cas pour mieux interpréter les commandes de l'utilisateur.

On connait un dispositif à dalle tactile capacitive utilisant quatre capteurs capacitifs agencés sous la dalle capacitive. La variation de capacité mesurée par ces capteurs capacitifs permet de mesurer le déplacement de la dalle capacitive et donne ainsi accès à l'effort d'appui exercé sur la dalle capacitive. Toutefois, ce dispositif nécessite de conserver un jeu entre les électrodes des capteurs capacitifs pour mesurer son déplacement. Ce jeu peut être ressenti par l'utilisateur comme un défaut de qualité. En outre, ce type de dispositif ne prévoit pas la génération d'un retour haptique de type vibratoire comme rétroaction à l'utilisateur. En effet, avec un tel dispositif, la vibration de la dalle tactile capacitive pourrait interférer avec la mesure du déplacement de la dalle tactile capacitive permettant de fournir l'information de la force d'appui.

En outre, le document FR2977334 A1 divulgue un actionneur de module d'interface tactile à retour haptique pour une dalle tactile, par exemple utilisant une technologie capacitive, apte à détecter un appui d'un utilisateur et à générer un retour haptique en fonction de l'appui détecté. La liaison entre la surface tactile et le bâti se fait par une liaison de type membrane semi-rigide, ou tout autre moyen de fixation permettant des mouvements limités, notamment en vibration le long de l'axe A, c'est-à-dire la direction perpendiculaire à la surface tactile.

Un des buts de la présente invention est de proposer un dispositif à interface capacitive pour véhicule automobile configuré pour générer un retour haptique à l'utilisateur, dont on peut déterminer la force d'appui exercée par l'utilisateur.

A cet effet, la présente invention a pour objet un dispositif à interface capacitive pour véhicule automobile comportant :
- une partie mobile comprenant une interface capacitive comportant :
   - au moins un capteur capacitif pour détecter au moins un contact d'un utilisateur sur la surface de l'interface capacitive, et
   - une plaque de contact agencée sur le capteur capacitif,
- une partie fixe destinée à être fixée au véhicule automobile, et
- un dispositif de mesure configuré pour mesurer un paramètre représentatif de la force d'appui exercée sur l'interface capacitive dans une direction d'enfoncement,
- au moins un actionneur vibratoire relié à l'interface capacitive de manière à faire vibrer l'interface capacitive dans le plan de la plaque de contact, et
- au moins un organe de fixation et d'amortissement interposé entre l'interface capacitive et la partie fixe pour relier la partie mobile à la partie fixe de manière à permettre un mouvement relatif entre la partie mobile et la partie fixe, ledit mouvement relatif comprenant la vibration créée par l'actionneur vibratoire dans le plan de la plaque de contact et le déplacement de la partie mobile par rapport à la partie fixe dans une direction d'enfoncement perpendiculaire au plan de la plaque de contact,
- l'organe de fixation et d'amortissement présentant une raideur plus importante dans la direction d'enfoncement que dans le plan de la plaque de contact dans lequel la partie mobile est susceptible de vibrer,
- une unité de retour haptique reliée au dispositif de mesure et à l'actionneur vibratoire, l'unité de retour haptique étant configurée pour piloter l'actionneur vibratoire en fonction d'un signal reçu par le dispositif de mesure.

Ainsi, la vibration de l'interface capacitive ne perturbe pas la mesure dans la direction d'enfoncement, la vibration de l'interface capacitive n'étant pas dirigée dans la direction d'enfoncement mais dans le plan de la plaque de contact, et donc avec peu d'effets des vibrations dans la direction d'enfoncement. On a ainsi dé-corrélé la direction du retour haptique de la direction de détection de l'effort pour éviter une interaction entre les deux. En outre, la mesure de la force d'appui exercée par l'utilisateur sur l'interface capacitive permet de contrôler le retour haptique relativement à cette information.

Par ailleurs, cela permet d'amortir différemment le déplacement de la partie mobile dans la direction d'enfoncement et dans le plan de la plaque de contact. En amortissant de manière plus importante le déplacement dans la direction d'enfoncement, on limite la course de déplacement de la partie mobile dans la direction d'enfoncement. Un enfoncement qui n'est pas perceptible par un utilisateur parait de meilleure qualité.

Selon une ou plusieurs caractéristiques du dispositif à interface capacitive, prise seule ou en combinaison,
- l'organe de fixation et d'amortissement présente une raideur de trois à huit fois supérieure dans la direction d'enfoncement que dans le plan de la plaque de contact,
- l'organe de fixation et d'amortissement présente une raideur dans la direction d'enfoncement comprise entre 80N/mm et 120N/mm et une raideur dans le plan de la plaque de contact comprise entre 15N/mm et 25N/mm,
- l'organe de fixation et d'amortissement comporte un premier et un deuxième éléments élastiques, le premier élément élastique étant interposé entre la partie fixe et le deuxième élément élastique et le deuxième élément élastique étant interposé entre le premier élément élastique et l'interface capacitive,
- la raideur du premier élément élastique dans la direction d'enfoncement est plus importante que la raideur du deuxième élément élastique dans le plan de la plaque de contact,
- le premier élément élastique est formé par une lame métallique agencée de manière sensiblement parallèle à la plaque de contact et le deuxième élément élastique est formé par un plot,
- le plot est reçu dans un orifice de la lame métallique ou de l'interface capacitive,
- l'organe de fixation et d'amortissement comporte un organe de fixation traversant le plot pour fixer l'interface capacitive à la lame métallique à travers le plot,
- la vibration de l'interface capacitive est dirigée dans le plan de la plaque de contact selon une direction quelconque du plan,
- l'organe de fixation et d'amortissement comporte un pontet parallélépipédique agencé entre l'interface capacitive et la partie fixe, ledit pontet parallélépipédique présentant une largeur dans une direction de vibration du plan de la plaque de contact plus petite qu'une hauteur du pontet parallélépipédique dans la direction d'enfoncement,
- la vibration de l'interface capacitive est uniquement dirigée selon la direction de vibration du plan de la plaque de contact,
- le dispositif de mesure comporte un capteur de déformation porté par une lame métallique interposée entre l'interface capacitive et la partie fixe de manière sensiblement parallèle à la plaque de contact de l'interface capacitive, pour mesurer la déformation de la lame métallique dans la direction d'enfoncement,
- le capteur de déformation comporte au moins une jauge de contrainte,
- le capteur de déformation est porté par une lame métallique de l'organe de fixation et d'amortissement,
- le capteur de déformation est porté par une lame métallique en contact ponctuel avec l'interface capacitive ou la partie fixe,
- le dispositif de mesure comporte un capteur de déplacement sans contact pour mesurer un déplacement de l'interface capacitive dans la direction d'enfoncement,
- le dispositif à interface capacitive comporte au moins quatre organes de fixation et d'amortissement,
- le dispositif à interface capacitive comporte une unité de retour haptique reliée au dispositif de mesure et à l'actionneur vibratoire, l'unité de retour haptique étant configurée pour piloter l'actionneur vibratoire en fonction d'un signal reçu par le dispositif de mesure.

### DESCRIPTION SOMMAIRE DES DESSINS

D'autres avantages et caractéristiques apparaîtront à la lecture de la description de l'invention, ainsi que sur les figures annexées qui représentent un exemple de réalisation non limitatif de l'invention et sur lesquelles :
- la figure 1 représente une vue schématique de dessus d'un premier exemple de dispositif à interface capacitive pour véhicule automobile,
- la figure 2 représente une vue schématique en coupe A-A du dispositif à interface capacitive de la figure 1,
- la figure 3 représente un détail du dispositif à interface capacitive de la figure 2,
- la figure 4 montre une vue schématique de dessus du détail du dispositif à interface capacitive de la figure 3,
- la figure 5 représente une vue schématique en coupe A-A d'un autre exemple de réalisation du dispositif de mesure du dispositif à interface capacitive,
- la figure 6 représente une vue schématique d'un deuxième exemple de dispositif à interface capacitive, et
- la figure 7 représente une vue schématique en coupe B-B du dispositif à interface capacitive de la figure 6.

Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

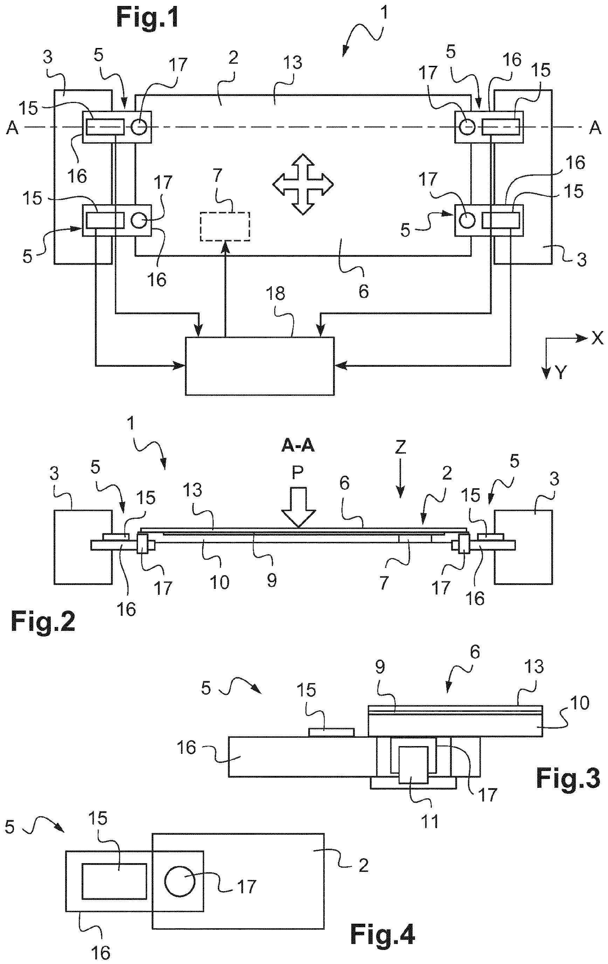

On désigne le plan horizontal (X, Y) et la direction verticale Z par le trièdre (X, Y, Z) indiqué sur la figure 1, fixe par rapport au dispositif à interface capacitive.

### DESCRIPTION DÉTAILLÉE

La figure 1 représente un exemple de réalisation d'un dispositif à interface capacitive 1 pour véhicule automobile, par exemple agencé dans un tableau de bord ou une console centrale du véhicule.

Le dispositif à interface capacitive 1 comporte une partie mobile 2 comprenant une interface capacitive 6, une partie fixe 3 destinée à être fixée au véhicule automobile, un dispositif de mesure configuré pour mesurer un paramètre représentatif de la force d'appui exercée sur l'interface capacitive 6, au moins un actionneur vibratoire 7 relié à l'interface capacitive 6 et au moins un organe de fixation et d'amortissement 5 interposé entre l'interface capacitive 6 et la partie fixe 3 pour relier la partie mobile 2 à la partie fixe 3.

L'interface capacitive 6 comporte au moins un capteur capacitif 9 pour détecter au moins un contact d'un utilisateur sur la surface de l'interface capacitive 6. Le capteur capacitif 9 peut par exemple détecter un contact ou un déplacement du doigt d'un utilisateur sur la surface tactile de l'interface capacitive 6, tel qu'un appui ou un déplacement de son doigt ou tout autre moyen d'activation (par exemple un stylet).

Pour cela, le capteur capacitif 9 comporte par exemple un réseau d'électrodes s'étendant sur tout ou partie d'un support plat par exemple de forme rectangulaire et rigide.

Selon un autre exemple, le capteur capacitif 9 comporte une antenne capacitive localisée, par exemple agencée sur une carte électronique, tel qu'un PCB pour « Printed circuit Board » en anglais. La carte électronique porte par exemple un ou plusieurs capteurs capacitifs disposés en différents endroits de la surface de la carte électronique.

L'interface capacitive 6 comporte en outre une plaque de contact 13, rigide, telle qu'une plaque de verre ou de plastique, par exemple d'une épaisseur supérieure à 0,5 millimètres, agencée sur le capteur capacitif 9 et permettant de procurer la rigidité souhaitée à l'interface capacitive 6. La surface tactile et plane de l'interface capacitive 6 est ainsi formée par la surface de la plaque de contact 13.

La plaque de contact 13 peut être peinte d'une couleur opaque de manière à cacher les éléments disposés derrière. L'interface capacitive 6 peut alors former ce qui est appelé un pavé tactile ou « Touchpad » en anglais ou un bouton poussoir ou « Push » en anglais.

Alternativement, l'interface capacitive 6 peut comporter un écran d'affichage (non représenté), tel qu'un écran TFT (« Thin-Film transistor » en anglais), disposé sous le capteur capacitif 9 de l'interface capacitive 6 de manière à former un écran tactile (« touchscreen » en anglais). L'écran d'affichage est par exemple fixé par collage au dos d'un support du au moins un capteur capacitif 9 détectant un contact d'un utilisateur en face avant. L'interface capacitive 6, c'est-à-dire le au moins un capteur capacitif 9 et la plaque de contact 13, sont alors transparents.

De manière générale, un contact sur la surface tactile de l'interface capacitive 6 permet notamment à un utilisateur de sélectionner ou d'activer une fonction, telle qu'une fonction du système de climatisation, de navigation, de l'autoradio ou le défilement et la sélection d'un choix parmi une liste, telle qu'une liste téléphonique.

L'actionneur vibratoire 7 est relié à l'interface capacitive 6 de manière à faire vibrer l'interface capacitive 6 dans le plan (X, Y) de la plaque de contact 13. La vibration de l'interface capacitive 6 est ainsi dirigée dans le plan de la plaque de contact 13 (plan horizontal (X, Y) en référence à la position du dispositif 1 sur la figure 1).

L'actionneur vibratoire 7 est par exemple fixé à l'interface capacitive 6 à laquelle il est tenu par exemple en étant fixé à la plaque de contact 13 ou à un support 10 de l'interface capacitive 6, directement ou indirectement via des éléments de support intermédiaires. L'interface capacitive 6 est alors reliée à la partie fixe 3 au moyen des organes de fixation et d'amortissement 5 par un montage « flottant ». Dans le montage flottant, l'actionneur vibratoire 7 n'est pas fixé à la partie fixe 3 par opposition à un montage « rattaché » dans lequel il aurait été solidaire du bâti de la partie fixe 3. Ainsi, lorsque l'interface capacitive 6 se met à vibrer, par exemple lors d'un retour haptique, les vibrations ne sont pas transmises à la partie fixe 3, ou alors de façon atténuée.

Selon un autre exemple, l'actionneur vibratoire 7 est fixé à la partie fixe 3 dans un montage rattaché.

La vibration de l'interface capacitive 6 permet de fournir un retour haptique à l'utilisateur en réponse à un contact, tel qu'un appui ou un déplacement de son doigt.

Le retour est dit « haptique », car il est perceptible par le toucher de l'interface capacitive 6.

L'actionneur vibratoire 7 est par exemple de type ERM (pour « Eccentric Rotating-Mass » en anglais) également appelé « moteur vibrant » ou moteur à masselotte. Selon un autre exemple, l'actionneur vibratoire 7 est de type électromagnétique. Il repose par exemple sur une technologie similaire à celle du Haut-Parleur (en anglais : « Voice-Coil »). L'actionneur vibratoire 7 est par exemple un LRA (pour « Linear Resonant Actuator » en anglais), également appelé « moteur linéaire ». La partie mobile est par exemple formée par un aimant mobile coulissant à l'intérieur d'une bobine fixe ou par une bobine mobile coulissant autour d'un aimant fixe, la partie mobile et la partie fixe coopérant par effet électromagnétique. Selon un autre exemple, l'actionneur vibratoire 7 est de type piézoélectrique.

Le dispositif de mesure est configuré pour mesurer un paramètre représentatif de la force d'appui exercée sur l'interface capacitive 6 dans une direction d'enfoncement Z (dans la direction verticale Z sur la figure 1), perpendiculaire au plan (X, Y) de la plaque de contact 13. Le paramètre représentatif de la force d'appui est par exemple une déformation ou un déplacement.

Le dispositif à interface capacitive 1 comporte en outre une unité de retour haptique 18, tel qu'un microprocesseur ou un microcontrôleur, reliée au dispositif de mesure et au(x) actionneur(s) vibratoire(s) 7.

L'unité de retour haptique 18 est configurée pour piloter l'actionneur vibratoire 7 afin de faire vibrer l'interface capacitive 6 en fonction d'un signal reçu par le dispositif de mesure.

Un retour haptique peut être généré en réponse à l'appui détecté, par exemple lorsque la durée et l'amplitude de la déformation franchissent un seuil respectif alors que le doigt de l'utilisateur est toujours en contact ou lorsque la mesure de l'effort exercé indique que l'utilisateur est en train de relâcher son doigt de l'interface capacitive 6.

Plus précisément, l'unité de retour haptique 18 peut par exemple définir l'allure (ou forme), la fréquence, le déphasage, l'amplitude de l'accélération, la durée de la vibration par exemple en relation avec l'effort mesuré exercé par l'utilisateur. Cette dépendance est par exemple une relation proportionnelle ou une loi mathématique ou peut être prédéfinie dans un tableau de correspondance préalablement stocké dans la mémoire de l'unité de retour haptique 18.

On peut aussi prévoir par exemple que l'unité de retour haptique 18 soit configurée pour piloter l'actionneur vibratoire 7 afin de générer un retour haptique uniquement lorsque l'effort mesuré est supérieur à un seuil de déclenchement. La programmation du retour haptique en fonction de seuils de déclenchements permet notamment de différencier la promenade du doigt de l'utilisateur sur l'interface capacitive 6, de l'appui intentionnellement réalisé pour activer ou sélectionner une commande par exemple. On évite également des générations intempestives de retour haptique qui pourraient survenir par frôlement involontaire de l'interface capacitive 6.

L'organe de fixation et d'amortissement 5 est interposé entre l'interface capacitive 6 et la partie fixe 3 de manière à permettre un mouvement relatif entre la partie mobile 2 et la partie fixe 3, le mouvement relatif comprenant la vibration créée par l'actionneur vibratoire 7 dans le plan (X, Y) de la plaque de contact 13 et le déplacement de la partie mobile 2 par rapport à la partie fixe 3 dans la direction d'enfoncement Z perpendiculaire au plan (X, Y) de la plaque de contact 13.

Ainsi, la vibration de l'interface capacitive 6 ne perturbe pas la mesure dans la direction d'enfoncement Z, la vibration de l'interface capacitive 6 n'étant pas dirigée dans la direction d'enfoncement Z mais dans le plan (X, Y) de la plaque de contact 13, et donc avec peu d'effets des vibrations dans la direction d'enfoncement Z. On a ainsi dé-corrélé la direction du retour haptique de la direction de détection de l'effort pour éviter une interaction entre les deux.

En outre, la mesure de la force d'appui exercée par l'utilisateur sur l'interface capacitive 6 permet de contrôler le retour haptique relativement à cette information. On peut ainsi paramétrer le retour haptique en fonction de la force d'appui exercée sur l'interface capacitive 6.

Le dispositif à interface capacitive 1 présente par exemple quatre organes de fixation et d'amortissement 5 agencés aux quatre coins de l'interface capacitive 6 comme on l'a représenté de manière schématique sur la figure 1.

On prévoit aussi que l'organe de fixation et d'amortissement 5 présente une raideur plus importante dans la direction d'enfoncement Z que dans le plan (X, Y) de la plaque de contact 13 dans lequel la partie mobile 2 est susceptible de vibrer. En effet, puisque la direction du retour haptique est dé-corrélée de la direction de détection de l'effort, on peut aussi prévoir d'amortir différemment le déplacement de la partie mobile 2 dans la direction d'enfoncement Z et dans le plan (X, Y) de la plaque de contact 13. En amortissant de manière plus importante le déplacement dans la direction d'enfoncement Z, on limite la course de déplacement de la partie mobile 2 dans la direction d'enfoncement Z. Il a en effet été constaté qu'un déplacement aussi faible que possible est associé à un dispositif de bonne qualité par l'utilisateur et qu'un déplacement perceptible est associé à un dispositif de faible qualité. Un enfoncement qui n'est pas perceptible par un utilisateur permet donc que le dispositif à interface capacitive 1 apparaisse de qualité supérieure.

L'organe de fixation et d'amortissement 5 présente par exemple une raideur de trois à huit fois supérieure dans la direction d'enfoncement Z que dans le plan (X, Y) de la plaque de contact 13 dans lequel la partie mobile 2 est susceptible de vibrer, telle que de l'ordre de cinq fois supérieure.

L'organe de fixation et d'amortissement 5 présente par exemple une raideur dans la direction d'enfoncement Z comprise entre 80N/mm et 120N/mm, tel que de l'ordre de 100N/mm et une raideur dans le plan (X, Y) de la plaque de contact 13 dans lequel la partie mobile 2 est susceptible de vibrer, comprise entre 15N/mm et 25N/mm, telle que de l'ordre de 20N/mm.

Le dispositif de mesure comporte par exemple un capteur de déformation 15 porté par une lame métallique interposée entre l'interface capacitive 6 et la partie fixe 3 de manière sensiblement parallèle à la plaque de contact 13 de l'interface capacitive 6, pour mesurer la déformation de la lame métallique 5 dans la direction d'enfoncement Z.

Selon un exemple de réalisation, le capteur de déformation 15 comporte au moins une jauge de contrainte. La déformation des fils résistifs des jauges de contrainte soumis à une extension ou une compression, permettent de traduire une déformation mécanique en variation de résistance électrique. Les jauges de contrainte permettent ainsi de mesurer des déformations avec une bonne précision, à moindre coût et sont faciles à agencer car il suffit de les coller sur les surfaces dont on souhaite mesurer la déformation. On utilise des capteurs de déformation 15 ultra précis aux faibles déformations, tels que de l'ordre du µm/m, pour limiter le déplacement dans la direction d'enfoncement Z et ainsi la perception du déplacement par l'utilisateur.

Selon un autre exemple, le dispositif de mesure comporte un capteur de déplacement sans contact pour mesurer un déplacement de la plaque de contact dans la direction d'enfoncement Z. Le capteur de déplacement sans contact peut être un capteur optique, inductif ou capacitif.

Selon un premier mode de réalisation représenté sur les figures 1, 2, 3, 4 et 5, l'organe de fixation et d'amortissement 5 comporte un premier et un deuxième éléments élastiques 16, 17.

Le premier élément élastique 16 est étant interposé entre la partie fixe 3 et le deuxième élément élastique 17. Le deuxième élément élastique 17 est interposé entre le premier élément élastique 16 et l'interface capacitive 6. L'amorti des vibrations dans le plan (X, Y) de la plaque de contact 13 par l'organe de fixation et d'amortissement 5 dépend ainsi uniquement de la raideur du deuxième élément élastique 17 dans le plan (X, Y) de la plaque de contact 13 et l'amorti du déplacement dans la direction d'enfoncement Z par l'organe de fixation et d'amortissement 5 dépend uniquement de la raideur du premier élément élastique 16 dans la direction d'enfoncement Z.

En outre, on peut prévoir que la raideur du premier élément élastique 16 dans la direction d'enfoncement Z soit plus importante que la raideur du deuxième élément élastique 17 dans le plan (X, Y) de la plaque de contact 13.

La raideur du premier élément élastique 16 dans la direction d'enfoncement Z est par exemple de trois à huit fois supérieure, telle que de l'ordre de cinq fois supérieure, à la raideur du deuxième élément élastique 17 dans le plan (X, Y) de la plaque de contact 13.

Le premier élément élastique 16 présente par exemple une raideur dans la direction d'enfoncement Z comprise entre 80N/mm et 120N/mm, tel que de l'ordre de 100N/mm et le deuxième élément élastique 17 présente par exemple une raideur dans le plan (X, Y) de la plaque de contact 13 comprise entre 15N/mm et 25N/mm, telle que de l'ordre de 20N/mm.

Le premier élément élastique 16 est par exemple formé par une lame métallique agencée de manière sensiblement parallèle à la plaque de contact 13. La lame métallique 16 est ainsi plate dans le plan (X, Y) et mince dans la direction d'enfoncement Z. Elle est par exemple en acier. La lame métallique 16 présente par exemple une épaisseur comprise entre 1mm et 2mm, telle que de l'ordre de 1,5mm, une longueur comprise entre 15mm et 25mm, telle que de l'ordre de 20mm et une largeur comprise entre 5mm et 10mm, telle que de l'ordre de 8mm. Les dimensions et la forme plate et mince de la lame métallique 16 lui confèrent ses propriétés de rigidité.

Le deuxième élément élastique 17 est par exemple formé par un plot.

Le plot peut être en silicone, élastomère ou caoutchouc.

Le diamètre du plot 17 cylindrique est par exemple compris entre 2mm et 8mm, tel que de l'ordre de 5mm. La longueur du plot 17 est par exemple comprise entre 1mm et 5mm, tel que de l'ordre de 3mm.

La vibration de l'interface capacitive 6 peut alors être dirigée dans n'importe quelle direction du plan de la plaque de contact 13 : selon une des directions de vibration X ou Y ou selon une combinaison de ces directions de vibration X et Y.

Le déplacement de la partie mobile 2 est ainsi amorti de manière plus importante dans la direction d'enfoncement Z que dans le plan (X, Y) de la plaque de contact 13 dans lequel la partie mobile 2 est susceptible de vibrer. Le plot 17 donne ainsi l'élasticité nécessaire à l'interface capacitive 6 pour vibrer dans le plan (X, Y). En Z, l'élasticité des lames métalliques 16 autorise le déplacement dans la direction d'enfoncement Z de la partie mobile 2 mais de manière très limitée par rapport au déplacement de l'interface capacitive 6 dans le plan (X, Y) de la plaque de contact 13.

Le plot 17 est par exemple reçu dans un orifice de la lame métallique 16.

Selon un exemple de réalisation, l'organe de fixation et d'amortissement 5 comporte également un organe de fixation 11 pour fixer l'interface capacitive 6 à la lame métallique 16 à travers le plot 17.

L'organe de fixation 11, tel qu'une vis, permet de fixer l'interface capacitive 6 à la lame métallique 16 à travers le plot 17.

L'organe de fixation 11 est fixé à l'interface capacitive 6 en étant isolé de la lame métallique 16 par le plot 17 introduit dans un orifice de la lame métallique 16. A l'inverse, l'organe de fixation 11 peut être fixé à la lame métallique 16 et isolé de l'interface capacitive 6 par le plot 17, l'extrémité de la tige de l'organe de fixation 11 s'insérant alors dans la lame métallique 16 (non représenté).

Le dispositif de mesure comporte par exemple un capteur de déformation 15 porté par la lame métallique 16 de l'organe de fixation et d'amortissement 5, sur laquelle il peut être collé. L'appui exercé par l'utilisateur déforme sensiblement la lame métallique 16 et cette déformation est mesurée par le capteur de déformation 15.

On prévoit par exemple que le dispositif à interface capacitive 1 comporte un capteur de déformation 15 porté par chaque organe de fixation et d'amortissement 5.

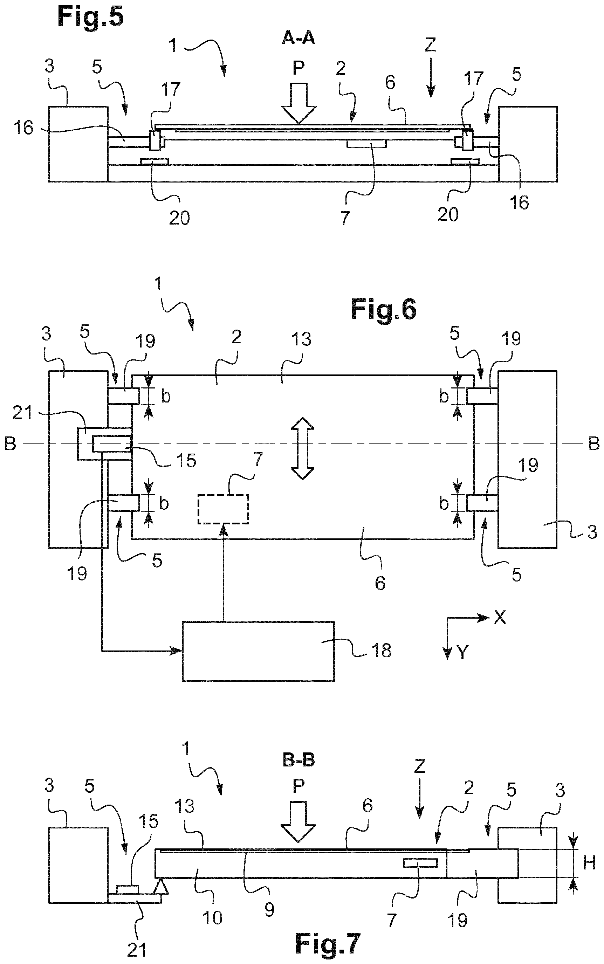

Selon un deuxième exemple de réalisation représenté sur la figure 5, le dispositif de mesure comporte un capteur de déplacement sans contact 20 pour mesurer un déplacement de la plaque de contact 13 dans la direction d'enfoncement Z.

Le capteur de déplacement sans contact 20 peut être un capteur inductif, capacitif ou optique. Il est par exemple fixé au bâti de la partie fixe 3 face à une partie métallisée portée par plot 17 ou face à l'embout de l'organe de fixation 11 métallique traversant le plot 17. Le capteur de déplacement sans contact 20 permet ainsi de mesurer le rapprochement de l'organe de fixation et d'amortissement 5 lorsqu'un appui est exercé sur l'interface capacitive 6.

On prévoit par exemple que le dispositif à interface capacitive 1 comporte un capteur de déplacement sans contact 20 face à chaque organe de fixation et d'amortissement 5.

En fonctionnement, l'utilisateur déplace ou appuie son doigt sur la plaque de contact 13 de l'interface capacitive 6 par exemple pour sélectionner ou activer une fonction (flèche P sur la figure 2 ou 5).

Le capteur capacitif 9 de l'interface capacitive 6 détecte ce contact et détermine par exemple sa position en X, Y pour exécuter la commande correspondante.

Simultanément, l'interface capacitive 6 se déplace sensiblement en enfoncement dans la direction Z. Ce déplacement de l'interface capacitive 6 vers la partie fixe 3 dépend de la force avec laquelle l'utilisateur appuie sur l'interface capacitive 6. Il produit une déformation dans la direction d'enfoncement Z qui peut être mesurée par le(s) capteur(s) de déformation 15. Alternativement, le déplacement de la partie mobile 2 vers le bâti peut être mesuré par le(s) capteur(s) de déplacement sans contact 20.

L'unité de retour haptique 18 reliée au dispositif de mesure et à l'actionneur vibratoire 7, pilote alors l'actionneur vibratoire 7 afin de faire vibrer l'interface capacitive 6 dans le plan (X, Y) de la plaque de contact 13, par exemple uniquement dans le cas où le paramètre représentatif de la force d'appui exercée est supérieur à un seuil de déclenchement.

La vibration générée fournit un retour haptique à l'utilisateur perceptible par son doigt en contact avec l'interface capacitive 6. La fréquence et/ou l'accélération de la vibration générée peuvent aussi par exemple, être modulés en fonction de la mesure du paramètre représentatif de la force d'appui exercée par l'utilisateur sur l'interface capacitive 6.

On comprend qu'avec le dispositif à interface capacitive 1, on peut paramétrer le retour haptique en fonction de la force d'appui P exercée sur l'interface capacitive 6 de manière qu'il soit mieux représentatif de l'intention de l'utilisateur. Cette mesure représentative de la force d'appui P exercée sur l'interface capacitive 6 réalisée avec un déplacement extrêmement faible de l'interface capacitive 6 augmente la qualité perçue du dispositif à interface capacitive 1.

Les figures 6 et 7 représentent un deuxième mode de réalisation du dispositif à interface capacitive 1 pour lequel l'organe de fixation et d'amortissement 5 comporte un pontet parallélépipédique 19 agencé entre l'interface capacitive 6 et la partie fixe 3.

Le pontet parallélépipédique 19 présente une largeur b dans une direction de vibration Y du plan X, Y de la plaque de contact 13 plus petite qu'une hauteur H dans la direction d'enfoncement Z. Le pontet parallélépipédique 19 est par exemple métallique, tel qu'en acier.

La vibration de l'interface capacitive 6 est uniquement dirigée selon la direction de vibration Y du plan (X, Y) de la plaque de contact (13), parallèle à la largeur b du pontet parallélépipédique 19.

Ainsi, le pontet parallélépipédique 19 est plus rigide dans la direction d'enfoncement Z où il présente une plus grande dimension que dans le plan (X, Y) où il présente une plus petite dimension. Le déplacement de la partie mobile 2 est donc amorti de manière plus importante dans la direction d'enfoncement Z que dans le plan (X, Y) de la plaque de contact 13 dans lequel la partie mobile 2 est susceptible de vibrer.

En outre, la forme de poutre du pontet parallélépipédique 19 donne une flèche de déformation proportionnelle à la relation b*H³. Il est donc possible d'obtenir une souplesse importante dans la largeur b avec une rigidité importante dans la hauteur H avec une hauteur H peu importante.

Le dispositif de mesure comporte par exemple un capteur de déformation 15 porté par une lame métallique 21 interposée entre l'interface capacitive 6 et la partie fixe 3 de manière sensiblement parallèle à la plaque de contact 13 de l'interface capacitive 6, pour mesurer la déformation de la lame métallique 5 dans la direction d'enfoncement Z.

La lame élastique 21 et l'interface capacitive 6 ou la partie fixe 3 sont en contact ponctuel de manière à ce que la lame élastique 21 n'ait pas, ou très peu, d'incidence sur la vibration dans le plan (X, Y) de la plaque de contact 13.

On définit par contact ponctuel, une surface de contact réduite. Le contact ponctuel est par exemple réalisé au moyen d'un élément pointu, le contact étant effectué à la pointe de l'élément. Plus généralement, le contact ponctuel peut être réalisé par un élément présentant une section (horizontale sur les figures) s'amincissant à une extrémité, tel qu'un élément conique ou tronconique.

La déformation dans la direction d'enfoncement Z déforme également la lame métallique 21 mince et plus souple que le pontet parallélépipédique 19 dans la direction d'enfoncement Z. La déformation de la lame métallique 21 est mesurée par le capteur de déformation 15 également déformé sous l'effet de l'appui exercé.

Alternativement, on peut prévoir que le dispositif de mesure comporte un capteur de déplacement sans contact (inductif, capacitif ou optique) pour mesurer un déplacement de l'interface capacitive 6 dans la direction d'enfoncement Z, ce qui permet de supprimer complètement les répercussions de la mesure du paramètre représentatif de la force d'appui exercé sur la vibration de l'interface capacitive 6.

## Revendications

1. Dispositif à interface capacitive (1) pour véhicule automobile comportant :
- une partie mobile (2) comprenant une interface capacitive (6) comportant :
- au moins un capteur capacitif (9) pour détecter au moins un contact d'un utilisateur sur la surface de l'interface capacitive (6), et
- une plaque de contact (13) agencée sur le capteur capacitif (9),
- une partie fixe (3) destinée à être fixée au véhicule automobile, et
- un dispositif de mesure (15) configuré pour mesurer un paramètre représentatif de la force d'appui exercée sur l'interface capacitive (6) dans une direction d'enfoncement (Z),
- au moins un actionneur vibratoire (7) relié à l'interface capacitive (6) de manière à faire vibrer l'interface capacitive (6) dans le plan (X, Y) de la plaque de contact (13), et
- au moins un organe de fixation et d'amortissement (5) interposé entre l'interface capacitive (6) et la partie fixe (3) pour relier la partie mobile (2) à la partie fixe (3) de manière à permettre un mouvement relatif entre la partie mobile (2) et la partie fixe (3), ledit mouvement relatif comprenant la vibration créée par l'actionneur vibratoire (7) dans le plan (X, Y) de la plaque de contact (13) et le déplacement de la partie mobile (2) par rapport à la partie fixe (3) dans une direction d'enfoncement (Z) perpendiculaire au plan (X, Y) de la plaque de contact (13),
- l'organe de fixation et d'amortissement (5) présentant une raideur plus importante dans la direction d'enfoncement (Z) que dans le plan (X, Y) de la plaque de contact (13) dans lequel la partie mobile (2) est susceptible de vibrer,
- une unité de retour haptique (18) reliée au dispositif de mesure et à l'actionneur vibratoire (7), l'unité de retour haptique (18) étant configurée pour piloter l'actionneur vibratoire (7) en fonction d'un signal reçu par le dispositif de mesure.

2. Dispositif à interface capacitive (1) selon la revendication précédente, **caractérisé en ce que** l'organe de fixation et d'amortissement (5) présente une raideur de trois à huit fois supérieure dans la direction d'enfoncement (Z) que dans le plan (X, Y) de la plaque de contact (13).

3. Dispositif à interface capacitive (1) selon l'une des revendications précédentes, **caractérisé en ce que** l'organe de fixation et d'amortissement (5) présente une raideur dans la direction d'enfoncement (Z) comprise entre 80N/mm et 120N/mm et une raideur dans le plan (X, Y) de la plaque de contact (13) comprise entre 15N/mm et 25N/mm.

4. Dispositif à interface capacitive (1) selon l'une des revendications précédentes, **caractérisé en ce que** l'organe de fixation et d'amortissement (5) comporte un premier et un deuxième éléments élastiques (16, 17), le premier élément élastique (16) étant interposé entre la partie fixe (3) et le deuxième élément élastique (17) et le deuxième élément élastique (17) étant interposé entre le premier élément élastique (16) et l'interface capacitive (6).

5. Dispositif à interface capacitive (1) selon la revendication précédente, **caractérisé en ce que** la raideur du premier élément élastique (16) dans la direction d'enfoncement (Z) est plus importante que la raideur du deuxième élément élastique (17) dans le plan (X, Y) de la plaque de contact (13).

6. Dispositif à interface capacitive (1) selon l'une des revendications 4 ou 5, **caractérisé en ce que** le premier élément élastique (16) est formé par une lame métallique agencée de manière sensiblement parallèle à la plaque de contact (13) et le deuxième élément élastique (17) est formé par un plot.

7. Dispositif à interface capacitive (1) selon la revendication précédente, **caractérisé en ce que** le plot (17) est reçu dans un orifice de la lame métallique (16) ou de l'interface capacitive (6).

8. Dispositif à interface capacitive (1) selon l'une des revendications 6 ou 7, **caractérisé en ce que** l'organe de fixation et d'amortissement (5) comporte un organe de fixation (11) traversant le plot (17) pour fixer l'interface capacitive (6) à la lame métallique (16) à travers le plot (17).

9. Dispositif à interface capacitive (1) selon l'une des revendications 6 à 8, **caractérisé en ce que** la vibration de l'interface capacitive (6) est dirigée dans le plan (X, Y) de la plaque de contact (13) selon une direction quelconque du plan (X, Y).

10. Dispositif à interface capacitive selon l'une des revendications 1 à 3, **caractérisé en ce que** l'organe de fixation et d'amortissement (5) comporte un pontet parallélépipédique (19) agencé entre l'interface capacitive (6) et la partie fixe (3), ledit pontet parallélépipédique (19) présentant une largeur (b) dans une direction de vibration (Y) du plan (X, Y) de la plaque de contact (13) plus petite qu'une hauteur (H) du pontet parallélépipédique (19) dans la direction d'enfoncement (Z).

11. Dispositif à interface capacitive (1) selon la revendication précédente, **caractérisé en ce que** la vibration de l'interface capacitive (6) est uniquement dirigée selon la direction de vibration (Y) du plan (X, Y) de la plaque de contact (13).

12. Dispositif à interface capacitive (1) selon l'une des revendications précédentes, **caractérisé en ce que** le dispositif de mesure comporte un capteur de déformation (15) porté par une lame métallique (16 ; 21) interposée entre l'interface capacitive (6) et la partie fixe (3) de manière sensiblement parallèle à la plaque de contact (13) de l'interface capacitive (6), pour mesurer la déformation de la lame métallique (16 ; 21) dans la direction d'enfoncement (Z).

13. Dispositif à interface capacitive (1) selon la revendication précédente, **caractérisé en ce que** le capteur de déformation (15) comporte au moins une jauge de contrainte.

14. Dispositif à interface capacitive (1) selon l'une des revendications 12 ou 13, **caractérisé en ce que** le capteur de déformation (15) est porté par une lame métallique (16) de l'organe de fixation et d'amortissement (5).

15. Dispositif à interface capacitive (1) selon l'une des revendications 12 ou 13, **caractérisé en ce que** le capteur de déformation (15) est porté par une lame métallique (21) en contact ponctuel avec l'interface capacitive (6) ou la partie fixe (3).

16. Dispositif à interface capacitive (1) selon l'une des revendications précédentes, **caractérisé en ce que** le dispositif de mesure comporte un capteur de déplacement sans contact (20) pour mesurer un déplacement de l'interface capacitive (6) dans la direction d'enfoncement (Z).

17. Dispositif à interface capacitive (1) selon l'une des revendications précédentes, **caractérisé en ce qu'**il comporte au moins quatre organes de fixation et d'amortissement (5).

## Patentansprüche

1. Vorrichtung mit kapazitiver Schnittstelle (1) für ein Kraftfahrzeug, aufweisend:
- einen beweglichen Abschnitt (2), der eine kapazitive Schnittstelle (6) umfasst, die Folgendes aufweist:
- mindestens einen kapazitiven Sensor (9) zur Detektion mindestens eines Kontakts eines Benutzers auf der Oberfläche der kapazitiven Schnittstelle (6), und
- eine Kontaktplatte (13), die auf dem kapazitiven Sensor (9) angeordnet ist,
- einen festen Abschnitt (3) zur Befestigung am Kraftfahrzeug, und
- eine Messvorrichtung (15), die dazu ausgebildet ist, einen Parameter zu messen, der für die Druckkraft repräsentativ ist, die auf die kapazitive Schnittstelle (6) in einer Eindrückrichtung (Z) ausgeübt wird,
- mindestens einen Vibrationsaktor (7), der so mit der kapazitiven Schnittstelle (6) verbunden ist, dass er die kapazitive Schnittstelle (6) in der Ebene (X, Y) der Kontaktplatte (13) vibrieren lässt, und
- mindestens ein Befestigungs- und Dämpfungsorgan (5), das zwischen der kapazitiven Schnittstelle (6) und dem festen Abschnitt (3) angeordnet ist, um den beweglichen Abschnitt (2) so mit dem festen Abschnitt (3) zu verbinden, dass eine relative Bewegung zwischen dem beweglichen Abschnitt (2) und dem festen Abschnitt (3) gestattet wird, wobei die relative Bewegung die Vibration, die vom Vibrationsaktor (7) in der Ebene (X, Y) der Kontaktplatte (13) erzeugt wird, und die Verschiebung des beweglichen Abschnitts (2) bezogen auf den festen Abschnitt (3) in einer Eindrückrichtung (Z) senkrecht zur Ebene (X, Y) der Kontaktplatte (13) umfasst,
- wobei das Befestigungs- und Dämpfungsorgan (5) eine höhere Steifheit in der Eindrückrichtung (Z) als in der Ebene (X, Y) der Kontaktplatte (13) aufweist, in welcher der bewegliche Abschnitt (2) vibrieren kann,
- eine haptische Rückmeldungseinheit (18), die mit der Messvorrichtung und dem Vibrationsaktor (7) verbunden ist, wobei die haptische Rückmeldungseinheit (18) dazu ausgebildet ist, den Vibrationsaktor (7) in Abhängigkeit von einem Signal zu steuern, das von der Messvorrichtung empfangen wird.

2. Vorrichtung mit kapazitiver Schnittstelle (1) nach dem vorhergehenden Anspruch, **dadurch gekennzeichnet, dass** das Befestigungs- und Dämpfungsorgan (5) eine dreibis achtmal höhere Steifheit in der Eindrückrichtung (Z) als in der Ebene (X, Y) der Kontaktplatte (13) aufweist.

3. Vorrichtung mit kapazitiver Schnittstelle (1) nach einem der vorhergehenden Ansprüche, **dadurch gekennzeichnet, dass** das Befestigungs- und Dämpfungsorgan (5) eine Steifheit in der Eindrückrichtung (Z) zwischen 80 N/mm und 120 N/mm und eine Steifheit in der Ebene (X, Y) der Kontaktplatte (13) zwischen 15 N/mm und 25 N/mm aufweist.

4. Vorrichtung mit kapazitiver Schnittstelle (1) nach einem der vorhergehenden Ansprüche, **dadurch gekennzeichnet, dass** das Befestigungs- und Dämpfungsorgan (5) ein erstes und ein zweites elastisches Element (16, 17) aufweist, wobei das erste elastische Element (16) zwischen dem festen Abschnitt (3) und dem zweiten elastischen Element (17) und das zweite elastische Element (17) zwischen dem ersten elastischen Element (16) und der kapazitiven Schnittstelle (6) angeordnet ist.

5. Vorrichtung mit kapazitiver Schnittstelle (1) nach dem vorhergehenden Anspruch, **dadurch gekennzeichnet, dass** die Steifheit des ersten elastischen Elements (16) in der Eindrückrichtung (Z) höher als die Steifheit des zweiten elastischen Elements (17) in der Ebene (X, Y) der Kontaktplatte (13) ist.

6. Vorrichtung mit kapazitiver Schnittstelle (1) nach einem der Ansprüche 4 oder 5, **dadurch gekennzeichnet, dass** das erste elastische Element (16) von einen Metallblatt gebildet ist, das im Wesentlichen parallel zur Kontaktplatte (13) angeordnet ist, und das zweite elastische Element (17) von einem Pad gebildet ist.

7. Vorrichtung mit kapazitiver Schnittstelle (1) nach dem vorhergehenden Anspruch, **dadurch gekennzeichnet, dass** das Pad (17) in einer Öffnung des Metallblatts (16) oder der kapazitiven Schnittstelle (6) aufgenommen ist.

8. Vorrichtung mit kapazitiver Schnittstelle (1) nach einem der Ansprüche 6 oder 7, **dadurch gekennzeichnet, dass** das Befestigungs- und Dämpfungsorgan (5) ein Befestigungsorgan (11) aufweist, das durch das Pad (17) hindurchgeht, um die kapazitive Schnittstelle (6) am Metallblatt (16) durch das Pad (17) zu befestigen.

9. Vorrichtung mit kapazitiver Schnittstelle (1) nach einem der Ansprüche 6 bis 8, **dadurch gekennzeichnet, dass** die Vibration der kapazitiven Schnittstelle (6) in der Ebene (X, Y) der Kontaktplatte (13) in eine beliebige Richtung der Ebene (X, Y) gelenkt wird.

10. Vorrichtung mit kapazitiver Schnittstelle nach einem der Ansprüche 1 bis 3, **dadurch gekennzeichnet, dass** das Befestigungs- und Dämpfungsorgan (5) eine quaderförmige Brücke (19) aufweist, die zwischen der kapazitiven Schnittstelle (6) und dem festen Abschnitt (3) angeordnet ist, wobei die quaderförmige Brücke (19) eine Breite (b) in einer Vibrationsrichtung (Y) der Ebene (X, Y) der Kontaktplatte (13) aufweist, die kleiner als eine Höhe (H) der quaderförmigen Brücke (19) in der Eindrückrichtung (Z) ist.

11. Vorrichtung mit kapazitiver Schnittstelle (1) nach dem vorhergehenden Anspruch, **dadurch gekennzeichnet, dass** die Vibration der kapazitiven Schnittstelle (6) nur in die Vibrationsrichtung (Y) der Ebene (X, Y) der Kontaktplatte (13) gelenkt wird.

12. Vorrichtung mit kapazitiver Schnittstelle (1) nach einem der vorhergehenden Ansprüche, **dadurch gekennzeichnet, dass** die Messvorrichtung einen Verformungssensor (15) aufweist, der von einem Metallblatt (16; 21) getragen wird, das zwischen der kapazitiven Schnittstelle (6) und dem festen Abschnitt (3) im Wesentlichen parallel zur Kontaktplatte (13) der kapazitiven Schnittstelle (6) angeordnet ist, um die Verformung des Metallblatts (16; 21) in der Eindrückrichtung (Z) zu messen.

13. Vorrichtung mit kapazitiver Schnittstelle (1) nach dem vorhergehenden Anspruch, **dadurch gekennzeichnet, dass** der Verformungssensor (15) mindestens einen Dehnungsmessstreifen aufweist.

14. Vorrichtung mit kapazitiver Schnittstelle (1) nach einem der Ansprüche 12 oder 13, **dadurch gekennzeichnet, dass** der Verformungssensor (15) von einem Metallblatt (16) des Befestigungs- und Dämpfungsorgans (5) getragen wird.

15. Vorrichtung mit kapazitiver Schnittstelle (1) nach einem der Ansprüche 12 oder 13, **dadurch gekennzeichnet, dass** der Verformungssensor (15) von einem Metallblatt (21) getragen wird, das mit der kapazitiven Schnittstelle (6) oder dem festen Abschnitt (3) in Punktkontakt steht.

16. Vorrichtung mit kapazitiver Schnittstelle (1) nach einem der vorhergehenden Ansprüche, **dadurch gekennzeichnet, dass** die Messvorrichtung einen kontaktlosen Verschiebungssensor (20) zur Messung einer Verschiebung der kapazitiven Schnittstelle (6) in der Eindrückrichtung (Z) aufweist.

17. Vorrichtung mit kapazitiver Schnittstelle (1) nach einem der vorhergehenden Ansprüche, **dadurch gekennzeichnet, dass** sie mindestens vier Befestigungs- und Dämpfungsorgane (5) aufweist.

## Claims

1. Capacitive interface device (1) for a motor vehicle comprising:
- a movable part (2) comprising a capacitive interface (6) comprising:
- at least one capacitive sensor (9) for detecting at least one contact of a user on the surface of the capacitive interface (6), and
- a contact plate (13) arranged on the capacitive sensor (9),
- a fixed part (3) intended to be fixed to the motor vehicle, and
- a measurement device (15) configured to measure a parameter representative of the pressing force exerted on the capacitive interface (6) in a direction of indentation (Z),
- at least one vibratory actuator (7) linked to the capacitive interface (6) so as to make the capacitive interface (6) vibrate in the plane (X, Y) of the contact plate (13), and
- at least one fixing and damping member (5) interposed between the capacitive interface (6) and the fixed part (3) to link the movable part (2) to the fixed part (3) so as to allow a relative movement between the movable part (2) and the fixed part (3), said relative movement comprising the vibration created by the vibratory actuator (7) in the plane (X, Y) of the contact plate (13) and the displacement of the movable part (2) with respect to the fixed part (3) in a direction of indentation (Z) at right angles to the plane (X, Y) of the contact plate (13),
- the fixing and damping member (5) exhibiting a greater stiffness in the direction of indentation (Z) than in the plane (X, Y) of the contact plate (13) in which the movable part (2) is capable of vibrating,
- a haptic feedback unit (18) linked to the measurement device and to the vibratory actuator (7), the haptic feedback unit (18) being configured to drive the vibratory actuator (7) as a function of a signal received by the measurement device.

2. Capacitive interface device (1) according to the preceding claim, **characterized in that** the fixing and damping member (5) exhibits a stiffness from three to eight times greater in the direction of indentation (Z) than in the plane (X, Y) of the contact plate (13).

3. Capacitive interface device (1) according to one of the preceding claims, **characterized in that** the fixing and damping member (5) exhibits a stiffness in the direction of indentation (Z) lying between 80 N/mm and 120 N/mm and a stiffness in the plane (X, Y) of the contact plate (13) lying between 15 N/mm and 25 N/mm.

4. Capacitive interface device (1) according to one of the preceding claims, **characterized in that** the fixing and damping member (5) comprises a first and a second elastic elements (16, 17), the first elastic element (16) being interposed between the fixed part (3) and the second elastic element (17) and the second elastic element (17) being interposed between the first elastic element (16) and the capacitive interface (6).

5. Capacitive interface device (1) according to the preceding claim, **characterized in that** the stiffness of the first elastic element (16) in the direction of indentation (Z) is greater than the stiffness of the second elastic element (17) in the plane (X, Y) of the contact plate (13).

6. Capacitive interface device (1) according to one of Claims 4 and 5, **characterized in that** the first elastic element (16) is formed by a metal leaf arranged substantially parallel to the contact plate (13) and the second elastic element (17) is formed by a post.

7. Capacitive interface device (1) according to the preceding claim, **characterized in that** the post (17) is received in an orifice of the metal leaf (16) or of the capacitive interface (6).

8. Capacitive interface device (1) according to one of Claims 6 and 7, **characterized in that** the fixing and damping member (5) comprises a fixing member (11) passing through the post (17) to fix the capacitive interface (6) to the metal leaf (16) through the post (17).

9. Capacitive interface device (1) according to one of Claims 6 to 8, **characterized in that** the vibration of the capacitive interface (6) is directed in the plane (X, Y) of the contact plate (13) in any direction of the plane (X, Y).

10. Capacitive interface device (1) according to one of Claims 1 to 3, **characterized in that** the fixing and damping member (5) comprises a parallelepipedal bridge piece (19) arranged between the capacitive interface (6) and the fixed part (3), said parallelepipedal bridge piece (19) having a width (b) in a direction of vibration (Y) of the plane (X, Y) of the contact plate (13) smaller than a height (H) of the parallelepipedal bridge piece (19) in the direction of indentation (Z).

11. Capacitive interface device (1) according to the preceding claim, **characterized in that** the vibration of the capacitive interface (6) is only directed in the direction of vibration (Y) of the plane (X, Y) of the contact plate (13).

12. Capacitive interface device (1) according to one of the preceding claims, **characterized in that** the measurement device comprises a deformation sensor (15) borne by a metal leaf (16; 21) interposed between the capacitive interface (6) and the fixed part (3) substantially parallel to the contact plate (13) of the capacitive interface (6), to measure the deformation of the metal leaf (16; 21) in the direction of indentation (Z).

13. Capacitive interface device (1) according to the preceding claim, **characterized in that** the deformation sensor (15) comprises at least one strain gauge.

14. Capacitive interface device (1) according to one of Claims 12 and 13, **characterized in that** the deformation sensor (15) is borne by a metal leaf (16) of the fixing and damping member (5).

15. Capacitive interface device (1) according to one of Claims 12 and 13, **characterized in that** the deformation sensor (15) is borne by a metal leaf (21) in point contact with the capacitive interface (6) or the fixed part (3).

16. Capacitive interface device (1) according to one of the preceding claims, **characterized in that** the measurement device comprises a contactless displacement sensor (20) for measuring a displacement of the capacitive interface (6) in the direction of indentation (Z).

17. Capacitive interface device (1) according to one of the preceding claims, **characterized in that** it comprises at least four fixing and damping members (5) .
